# EUROPÄISCHE PATENTANMELDUNG

(11) **EP 4 105 530 A1**
(43) Veröffentlichungstag der Anmeldung: **21.12.2022**
(21) Anmeldenummer: 22179099.1
(22) Anmeldetag: 15.06.2022
(51) Int. Cl.: F16K 31/122, F15B 13/02, F16K 15/02, F16K 15/18, F16K 17/04, F16K 17/10, F15B 21/044, F15B 20/00, F15B 13/10

(54) **ENTSPERRBARES RÜCKSCHLAGVENTIL MIT HANDENTLÜFTUNG**

(30) Priorität: 16.06.2021 DE 202021103229 U
(71) Anmelder: Baumgartner Pneumatik GmbH, 63579 Freigericht (DE)
(72) Erfinder: BAUMGARTNER, Bodo, 63579 Freigericht (DE); CARLSDOTTER, Henrik-Nils, 63579 Freigericht (DE)
(74) Vertreter: Stoffregen, Hans-Herbert

(57) **Zusammenfassung**

Die Erfindung bezieht sich auf ein Entsperrbares Rückschlagventil (10) mit Handentlüftung, mit einem ersten Ventilanschluss (14), einem zweiten Ventilanschluss (16) und einem Ventilkörper (26) mit einem Dichtelement (30), das in einer Sperrstellung durch Anlage an einem Ventilsitz (32) eine fluidische Verbindung zwischen dem zweiten Ventilanschluss (16) und dem ersten Ventilanschluss (14) sperrt, wobei der Ventilkörper (26) mittels eines Entsperrstößels (66) in eine entsperrte Stellung steuerbar ist, in der die fluidische Verbindung zwischen dem ersten Ventilanschluss (14) und dem zweiten Ventilanschluss (16) geöffnet ist, wobei in dem Rückschlagventil (10) ein Drucktaster-Entlüftungsventil (20) integriert ist, welches über einen Strömungskanal (50) mit dem zweiten Ventilanschluss (16) gekoppelt ist, wobei das Drucktaster-Entlüftungsventil (20) in Sperrstellung eine fluidische Verbindung zwischen dem zweiten Ventilanschluss und der Atmosphäre sperrt und in einer betätigten Stellung die fluidische Verbindung öffnet und den zweiten Ventilanschluss (16) mit der Atmosphäre verbindet, um an dem Ventilkörper (26) anstehendes Fluid an die Atmosphäre abzuleiten. Das Rückschlagventil zeichnet sich dadurch aus, dass das Drucktaster-Entlüftungsventil (20) in einem von dem Rückschlagventil (10) ausgehenden Stutzen (56) angeordnet ist, wobei das Drucktaster-Entlüftungsventil (20) ein Drucktastelement (126) aufweist, welches von dem Stutzen (56) umschlossen ist und dessen Vorderseite bezogen auf einen äußeren Rand (130) des Stutzens (56) bündig oder leicht nach innen versetzt angeordnet ist und dass in einer Wandung des Stutzens (56) radiale Entlüftungskanäle (116) ausgebildet sind, über die aus der geöffneten fluidischen Verbindung austretendes Fluid an die Atmosphäre geleitet wird.

## Beschreibung

Die Erfindung bezieht sich auf ein entsperrbares Rückschlagventil mit Handentlüftung mit einem ersten Ventilanschluss, einem zweiten Ventilanschluss und einem Ventilkörper mit einem Dichtelement, das in einer Sperrstellung durch Anlage an einem Ventilsitz eine fluidische Verbindung zwischen dem zweiten Ventilanschluss und dem ersten Ventilanschluss sperrt, wobei der Ventilkörper mittels eines Entsperrstößels in eine entsperrte Stellung steuerbar ist, in der die fluidische Verbindung zwischen dem ersten Ventilanschluss und dem zweiten Ventilanschluss geöffnet ist, wobei in dem Rückschlagventil ein Drucktaster-Entlüftungsventil integriert ist, welches über einen Strömungskanal mit dem zweiten Ventilanschluss gekoppelt ist und wobei das Drucktaster-Entlüftungsventil in Sperrstellung eine fluidische Verbindung zwischen dem zweiten Ventilanschluss und der Atmosphäre sperrt und in einer betätigten Stellung die fluidische Verbindung öffnet und den zweiten Ventilanschluss mit der Atmosphäre verbindet, um an dem Ventilkörper anstehendes Fluid an die Atmosphäre abzuleiten.

Die DE 198 37 960 A1 bezieht sich auf eine Ventileinheit, bei der zwischen einem Einlasskanal und einem Auslasskanal ein entsperrbares Rückschlagventil eingeschaltet ist.

Darüber hinaus sind in Reihenschaltung mit dem entsperrbaren Rückschlagventil ein weiteres Rückschlagventil und eine diesem parallelgeschaltete Drosseleinrichtung vorgesehen. Zusätzlich ist eine Handentlüftungseinrichtung vorhanden, die ein manuelles Entlüften des Auslasskanals ermöglicht, ohne dem entsperrbaren Rückschlagventil einen Steuerdruck zuführen zu müssen.

Eine Ventileinheit in Form eines entsperrbaren Rückschlagventils mit Handentlüftung ist aus der DE 20 2017 101 712 U1 bekannt. Das entsperrbare Rückschlagventil umfasst einen ersten Ventilanschluss zur Verbindung mit einer Fluidquelle, wie Druckluftquelle, einen zweiten Ventilanschluss zur Verbindung mit einem Arbeitsanschluss eines fluidischen Aktors sowie einen Steueranschluss zur Verbindung mit einem Ausgang eines Steuerventils.

Durch ein Steuersignal an dem Steueranschluss kann der Durchfluss von dem ersten Ventilanschluss zu dem zweiten Ventilanschluss und umgekehrt freigeschaltet werden. Bei einem Wegfall des Steuersignals an dem Steuereingang ist der Durchfluss von dem Ventilanschluss zu dem Ventilanschluss gesperrt und von dem Ventilanschluss zu dem Ventilanschluss frei.

Derartige entsperrbare Rückschlagventile werden als Sicherheitsventile zu Ansteuerung eines fluidischen Aktors verwendet. Jeweils ein Rückschalgventil ist an dem Arbeitsanschluss einer ersten und zweiten Druckkammer des fluidischen Aktors angeschlossen. Im Normalbetrieb ist der Steueranschluss mit Druck beaufschlagt, so dass das Rückschlagventil 10 geöffnet und der Durchfluss von dem Ventilanschluss 14 zu dem Ventilanschluss 16 freigeschaltet ist. In dieser Stellung kann ein Aktorglied wie Kolben des fluidischen Aktors angesteuert werden.

Bei einer Störung (NOT-STOP), z. B. durch Öffnen einer Tür zu einer Arbeitszelle durch einen Werker, fällt der Druck an dem Steuereingang ab und das Rückschlagventil sperrt den Durchfluss von dem Ventilanschluss zu dem Ventilanschluss. In diesem Fall ist sichergestellt, dass das Fluid in den Druckkammern des fluidischen Aktors eingeschlossen ist, mit der Folge, dass das Aktorglied wie Kolben daran gehindert ist, sich zu bewegen.

Oft besteht jedoch das Bedürfnis, das Aktorglied nach einem NOT-STOP zu bewegt, da z. B. ein Werkstück eingeklemmt ist. Hierzu ist vorgesehen, dass das Rückschlagventil mittels eines Stößels per Hand betätigt und das Fluid aus der Druckkammer in ein Steuerventil abgeleitet wird. Die Handentlüftung mittels Stößel ist jedoch umständlich und unsicher. Bei der Handentlüftung wird das Fluid von der Druckkammer des fluidischen Aktors über den Ventilanschluss 16 zu dem Ventilanschluss 14 und das Steuerventil in die Atmosphäre geleitet. Dies ist jedoch nur dann sichergestellt, wenn das Steuerventil in Mittelstellung geöffnet ist. Dadurch ist jedoch die Verwendung von Steuerventilen eingeschränkt; denn 5/3-Wegeventile, die in Mittelstellung geschlossen sind, können nicht eingesetzt werden.

Davon ausgehend liegt der vorliegenden Erfindung die Aufgabe zugrunde, ein Rückschlagventil der eingangs genannten Art derart weiterzubilden, dass eine sichere und einfache Entlüftung per Hand, insbesondere in Notsituationen, ermöglicht wird.

Die Aufgabe wird erfindungsgemäß dadurch gelöst, dass das Drucktaster-Entlüftungsventil in einem von dem Rückschlagventil ausgehenden Stutzen angeordnet ist, wobei das Drucktaster-Entlüftungsventil ein Drucktastelement aufweist, welches von dem Stutzen umschlossen ist und dessen Vorderseite bezogen auf einen äußeren Rand des Stutzens bündig oder leicht nach innen versetzt angeordnet ist und dass in einer Wandung des Stutzens radiale Entlüftungskanäle ausgebildet sind, über die aus der geöffneten fluidischen Verbindung austretendes Fluid an die Atmosphäre geleitet wird.

Durch das integrierte Drucktaster-Entlüftungsventil ist eine sichere und einfache Handhabung gewährleistet. Eine Entlüftung des Rückschlagventils in die Atmosphäre ist ohne Hilfsmittel auch in Notsituationen möglich. Auf den Einsatz spezieller Steuerventile oder zusätzlicher Entlüftungsventile kann verzichtet werden.

Das Drucktaster-Entlüftungsventil ist in einem von dem Rückschlagventil ausgehenden Stutzen angeordnet, wobei das Drucktaster-Entlüftungsventil ein Drucktastelement aufweist, welches von dem Stutzen umschlossen ist und dessen Vorderseite bezogen auf einen äußeren Rand des Stutzens bündig oder leicht nach innen versetzt angeordnet ist. Durch die Integration in einen Stutzen ist das Drucktaster-Entlüftungsventil vor Verschmutzung und Beschädigung geschützt.

In einer Wandung des Stutzens sind radiale Entlüftungskanäle ausgebildet, über die aus der geöffneten fluidischen Verbindung austretendes Fluid an die Atmosphäre geleitet wird. Die radialen Entlüftungskanäle haben den Vorteil, dass diese bei einer Druckbetätigung durch Finger oder Daumen nicht abgedeckt werden.

Zudem ist vorgesehen, dass in dem Stutzen eine Aufnahme ausgebildet ist, die über den Strömungskanal mit dem zweiten Ventilanschluss gekoppelt ist, wobei in der Aufnahme ein Schließelement mit zumindest einem Dichtelement angeordnet ist, welches in der gesperrten Stellung gegen einen Ventilsitz anliegt und die fluidische Verbindung zwischen dem zweiten Ventilanschluss und der Atmosphäre sperrt und in einer betätigten Stellung die fluidische Verbindung öffnet.

Das Schließelement weist vorzugsweise einen Führungskörper auf, der zumindest abschnittsweise an einer Innenwandung der Aufnahme anliegt, wobei von dem Führungskörper ein Schließbolzen ausgeht, der das zumindest eine Dichtelement, wie Ringdichtung, trägt und von dem das Drucktastelement ausgeht.

Besonders bevorzugt ist das Schließelement mittels eines umlaufenden Rings in der Aufnahme fixiert, wobei in dem umlaufenden Ring der Ventilsitz ausgebildet ist, durch den sich der Schließbolzen erstreckt.

Die radialen Strömungskanäle sind vorzugsweise zwischen einer Innenseite des Drucktastelementes und dem Ring ausgebildet.

Das Führungsteil ist im Querschnitt im Wesentlichen quadratisch ausgebildet und weist gerade Randabschnitte sowie bogenförmige Randabschnitte auf, wobei die bogenförmigen Randabschnitte an eine zylinderförmige Innenfläche der Aufnahme angepasst sind und die geraden Randabschnitte mit der Innenwandung der Aufnahme Strömungskanäle bilden. Ferner bezieht sich die Erfindung auf ein Drucktaster-Entlüftungsventil, welches in einem, insbesondere von dem Rückschlagventil ausgehenden, Stutzen angeordnet ist, wobei das Drucktaster-Entlüftungsventil ein Drucktastelement aufweist, welches von dem Stutzen umschlossen, wobei in dem Stutzen ein axial verschiebbares Schließelement angeordnet ist, von dem das Drucktastelement ausgeht, welches mittels eines Federelementes gegen einen Ventilsitz federvorgespannt ist und eine fluidische Verbindung zwischen einem Strömungskanal (50) und der Atmosphäre sperrt und in einer betätigten Stellung die fluidische Verbindung öffnet. Eine erfindungsgemäßes Handentlüftungsventil zeichnet sich dadurch aus, dass eine Vorderseite des Drucktastelementes (126) bezogen auf einen äußeren Rand (130) des Stutzens (56) bündig oder leicht nach innen versetzt angeordnet ist und dass in einer Wandung des Stutzens (56) radiale Entlüftungskanäle (116) ausgebildet sind, über die aus der fluidischen Verbindung austretendes Fluid an die Atmosphäre geleitet wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine perspektive Darstellung eines entsperrbaren Rückschlagventils mit Handentlüftungsventil zur Handentlüftung in die Atmosphäre,
- Fig. 2: eine Schnittdarstellung des Rückschlagventils gemäß Fig. 1,
- Fig. 3a: eine Schnittdarstellung des Handentlüftungsventils in geschlossener Stellung,
- Fig. 3b: eine Schnittdarstellung des Handentlüftungsventils in geöffneter Stellung und
- Fig. 4: eine perspektivische Ansicht des Drucktastelementes mit Führungsstück.

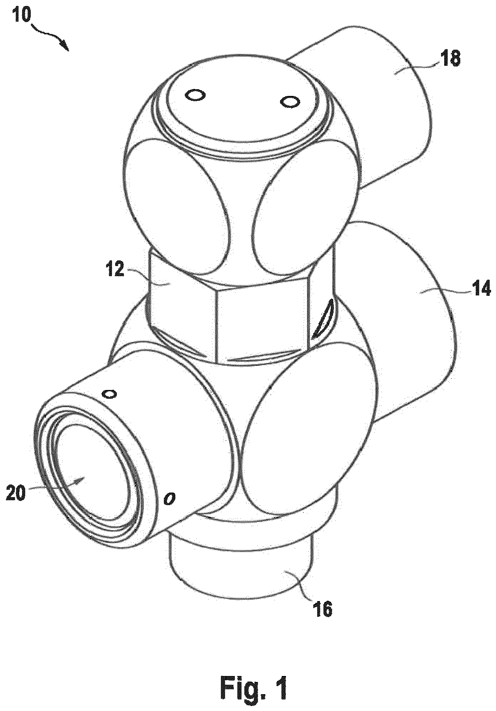

Fig. 1 zeigt in perspektivischer Darstellung ein entsperrbares Rückschlagventil 10 mit einem Ventilgehäuse 12, von dem ein erster Ventilanschluss 14 zur Verbindung mit einer Fluidquelle, wie Druckluftquelle (nicht dargestellt), ein zweiter Ventilanschluss 16 zur Verbindung mit einem Arbeitsanschluss eines fluidischen Aktors (nicht dargestellt) sowie ein Steueranschluss 18 zur Verbindung mit einem Ausgang eines Steuerventils (nicht dargestellt) ausgehen.

Durch ein Steuersignal an dem Steueranschluss 18 kann der Durchfluss von dem ersten Ventilanschluss 14 zu dem zweiten Ventilanschluss 16 und umgekehrt freigeschaltet werden. Bei einem Wegfall des Steuersignals an dem Steuereingang 18 ist der Durchfluss von dem Ventilanschluss 16 zu dem Ventilanschluss 14 gesperrt und von dem Ventilanschluss 14 zu dem Ventilanschluss 16 frei.

Derartige entsperrbare Rückschlagventile 10 werden als Sicherheitsventile zu Ansteuerung eines fluidischen Aktors verwendet. Jeweils ein Rückschalgventil ist an dem Arbeitsanschluss einer ersten und zweiten Druckkammer des fluidischen Aktors angeschlossen. Im Normalbetrieb ist der Steueranschluss 18 mit Druck beaufschlagt, so dass das Rückschlagventil 10 geöffnet und der Durchfluss von dem Ventilanschluss 14 zu dem Ventilanschluss 16 freigeschaltet ist. In dieser Stellung kann ein Aktorglied wie Kolben des fluidischen Aktors angesteuert werden.

Bei einer Störung (NOT-STOP), z. B. durch Öffnen einer Tür zu einer Arbeitszelle durch einen Werker, fällt der Druck an dem Steuereingang 18 ab und das Rückschlagventil 10 sperrt den Durchfluss von dem Ventilanschluss 16 zu dem Ventilanschluss 14. In diesem Fall ist sichergestellt, dass das Fluid in den Druckkammern des fluidischen Aktors eingeschlossen ist, mit der Folge, dass das Aktorglied wie Kolben daran gehindert ist, sich zu bewegen.

Oft besteht jedoch das Bedürfnis, das Aktorglied nach einem NOT-STOP zu bewegt, da z. B. ein Werkstück eingeklemmt ist. Hierzu ist vorgesehen, dass das Rückschlagventil mittels eines Stößels per Hand betätigt und das Fluid aus der Druckkammer in ein Steuerventil abgeleitet wird. Die Handentlüftung mittels Stößel ist jedoch umständlich und unsicher. Bei der Handentlüftung wird das Fluid von der Druckkammer des fluidischen Aktors über den Ventilanschluss 16 zu dem Ventilanschluss 14 und das Steuerventil in die Atmosphäre geleitet. Dies ist jedoch nur dann sichergestellt, wenn das Steuerventil in Mittelstellung geöffnet ist. Dadurch ist jedoch die Verwendung von Steuerventilen eingeschränkt; denn 5/3-Wegeventile, die in Mittelstellung geschlossen sind, können nicht eingesetzt werden.

Gemäß der Erfindung ist vorgesehen, dass das entsperrbare Rückschlagventil 10 ein handbetätigbares Drucktaster-Entlüftungsventil 20 aufweist, welches über einen Strömungskanal fluidisch mit dem zweiten Ventilanschluss 16 derart gekoppelt ist, dass der zweite Ventilanschluss 16 bei Betätigung des Drucktaster-Entlüftungsventils 20 mit der Atmosphäre verbunden ist.

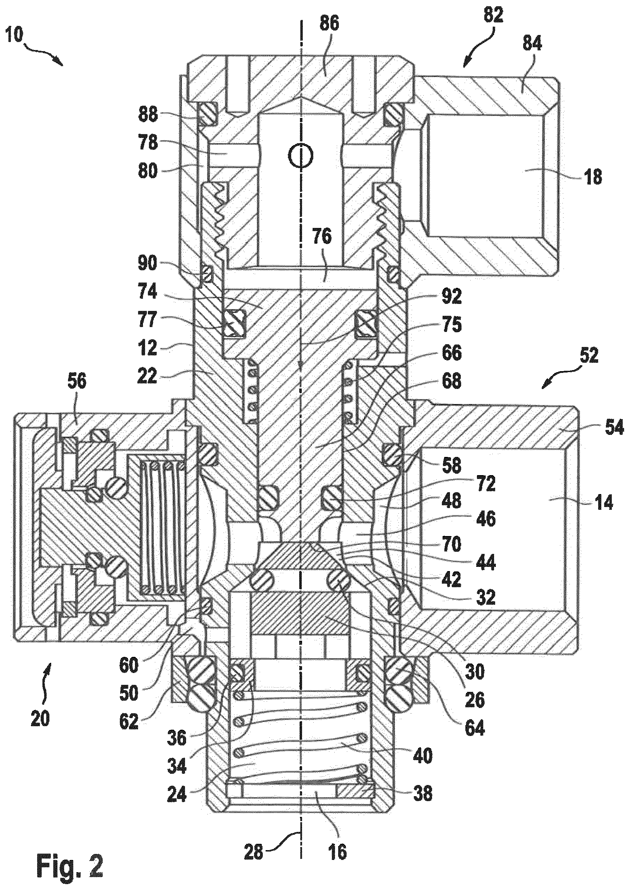

Fig. 2 zeigt einen Längsschnitt des Rückschlagventils 10 gemäß Fig. 1. Das Ventilgehäuse 12 umfasst einen Grundkörper 22 in Form eines Hohlzylinders mit dem zweiten Ventilanschluss 16. Der Ventilanschluss 16 definiert eine Aufnahme 24, in der ein Ventilkörper 26 in Richtung einer Längsachse 28 verschiebbar aufgenommen ist. Der Ventilkörper 26 umfasst ein Dichtelement 30 wie Ringdichtung, das durch Fluiddruck gegen einen Ventilsitz 32 anliegt und eine Strömung des Fluids von dem zweiten Ventilanschluss 16 zu dem ersten Ventilanschluss 14 sperrt. Ferner umfasst der Ventilkörper 26 einen Führungsteil 34 mit einer umlaufenden Dichtung 36, die an einer Innenwandung der Aufnahme anliegt.

Alternativ ist zwischen dem Ventilkörper 26 und einem anschlussseitigen Anschlag 38 in der Aufnahme 24 ein Federelement 40 angeordnet, mittels dessen der Ventilkörper 36 gegen den Ventilsitz 34 mit Kraft beaufschlagt wird, so dass das Dichtelement 30 eine Fluidströmung von dem ersten Ventilanschluss 14 zu dem zweiten Ventilanschluss 16 sperrt.

Die Aufnahme 24 des Ventilanschlusses 16 ist über eine Öffnung 42, wie Bohrung, die den Ventilsitz 32 definiert, mit einer Kammer 44 gekoppelt, die über Strömungskanäle 46 in einer Wandung des Grundkörpers 22 in einen umlaufenden Verteilerkanal 48 münden, der mit dem ersten Ventilanschluss 14 gekoppelt ist. Ferner ist die Aufnahme 24 über einen Strömungskanal 50 mit dem Drucktaster-Entlüftungsventil 20 gekoppelt, um den an dem Ventilkörper 26 anliegenden Fluiddruck an die Atmosphäre abzuleiten zu können.

Auf dem Grundkörper 22 ist koaxial ein Ringverteiler 52 angeordnet, der den umlaufenden Verteilerkanal 48 begrenzt. Von dem Ringverteiler 52 geht ein erster Stutzen 54 in radialer Richtung aus, der den ersten Ventilanschluss 14 bildet. Ferner umfasst der Ringverteiler 52 einen zweiten Stutzen 56, in dem das Drucktaster-Auslassventil 20 aufgenommen ist.

In einer Außenwand des Grundkörpers 22 sind oberhalb und unterhalb des umlaufenden Strömungskanals 48 Dichtelemente 58, 60, wie O-Ring, vorgesehen, über die der Ringverteiler 52 gegenüber der Umgebung abgedichtet ist.

Der Ringverteiler 52 ist mittels eines Fixierelementes 62, wie Pressring, auf dem Grundkörper 22 fixiert ist. Das Fixierelement 62 umfasst zumindest ein weiteres Dichtelement 64, wie O-Ring. In einem Wandabschnitt zwischen dem Dichtelement 60 für den umlaufenden Strömungskanal 48 und dem Dichtelement 64 des Fixierelementes 62 ist der Strömungskanal 50 angeordnet. Der Strömungskanal 50 umfasst einen ersten Abschnitt in der Wandung des Grundkörpers 22 und einen zweiten Abschnitt in der Wandung des Ringverteilers 52. Über den Strömungskanal 50 ist der zweite Ventilanschluss 16 mit dem Drucktaster-Entlüftungsventil 20 gekoppelt. Wenn sich der Ventilkörper 26 in einer gesperrten Stellung befindet, besteht eine Fluidverbindung zu dem ersten Ventilanschluss 14 nicht.

Der Ventilkörper 26 ist mittels eines Entsperrstößels 66 steuerbar bzw. entsperrbar, wobei der Entsperrstößel 66 in einer Führung 68 des Grundkörpers 22 in Richtung der Längsachse 28 verschiebbar angeordnet ist. Der Entsperrstößel 66 umfasst eine Stößelspitze 70, die auf den Ventilkörper 26 wirkt und über ein Dichtelement 72 gegenüber der Führung abgedichtet ist

Ferner umfasst der Entsperrstößel 66 einen Kolbenteil 74, der in einer Steuerkammer 76 verschiebbar gelagert ist. Der Kolbenteil 74 weist eine umlaufendes Dichtelement 77, wie Kreuzdichtung, auf, das an einer Innenwandung der Steuerkammer 76 dichtend anliegt. Zwischen dem Kolbenteil 74 und einem Vorsprung der Führung 68 ist koaxial zu der Stößelspitze 70 ein Federelement 75 angeordnet, welches den Entsperrstößel 66 in einem nicht mit Fluiddruck beaufschlagten Zustand in den Steuerkammer 76 gegen einen Anschlag drückt, so dass die Stößelspitze nicht mit dem Ventilkörper 26 in Kontakt ist.

Die Steuerkammer 76 mündet über Strömungskanäle 78 in einen umlaufenden Ringkanal 80, der von einem Ringverteiler 82 begrenzt ist. Von dem Ringverteiler 82 erstreckt sich in radialer Richtung ein Stutzen 84, der den Steueranschluss 18 bildet. Der Ringverteiler 82 ist auf ein offenes Ende des Grundkörpers 22 aufgesteckt und über eine Verschraubung 86 verschraubt. Der Ringkanal ist über Dichtelemente 88, 90 abgedichtet, wobei das Dichtelement 88 in der Verschraubung 86 und das Dichtelement 90 in der Wandung des Grundkörpers 22 angeordnet ist.

Die Funktion der entsperrbaren Rückschlagventile 10 ist wie folgt:
Durch Beaufschlagung des Steueranschlusses 18 mit Fluiddruck wird der Entsperrstößel 66 gegen die Federkraft des Federelementes 75 in Richtung des Pfeils 92 gegen den Ventilkörper 26 mit Kraft beaufschlagt. Dadurch wird der Ventilkörper 26 gegen die Federkraft des Federelementes 40 aus dem Ventilsitz 32 gedrückt, so dass der erste Ventilanschluss 14 fluidtechnisch mit dem zweiten Ventilanschluss 16 verbunden ist. In diesem Zustand können die mit dem jeweiligen Ventilanschluss 16 verbundenen Druckkammern des fluidischen Aktors, wie Arbeitszylinder, mit Fluiddruck beaufschlagt werden, um das in dem Aktor angeordnete Aktorglied, wie Kolben, aus einer ersten Stellung in eine zweite Stellung und zurück zu bewegen.

Sobald der Fluiddruck an dem Steuereingang 18 unterbrochen wird, z. B. in einem Störfall (NOT-STOP), wird der Entsperrstößel 66 durch das Federelement 75 von dem Ventilkörper 26 weg in seine Ausgangslage bewegt, so dass der Ventilkörper 26 mit seinem Dichtelement 30 durch den Fluiddruck der angeschlossenen Druckkammer gegen den Ventilsitz 32 gepresst wird. In dieser Stellung ist das Aktorglied gesperrt, da beide Druckkammern durch die jeweiligen Rückschlagventile 10 blockiert sind.

Um das Aktorglied in dieser Situation bewegen zu können, z. B. wenn ein Werkstück verklemmt ist, ist gemäß der Erfindung vorgesehen, dass in dem entsperrbaren Rückschlagventil 10 ein Drucktaster-Entlüftungsventil 20 integriert ist, mittels dessen der an dem zweiten Ventilanschluss 16 anstehende Fluiddruck der Druckkammer des Aktors unmittelbar über das Entlüftungsventil 20 an die Umgebung abgelassen werden kann. Dies ist besonders in Notsituationen von großer Bedeutung, wenn das Aktorglied eines fluidischen Aktors in eine Gefahr bringende Stellung verfahren wurde und die Druckkammer des Aktors schnell und auf einfache Weise entlüftet werden muss.

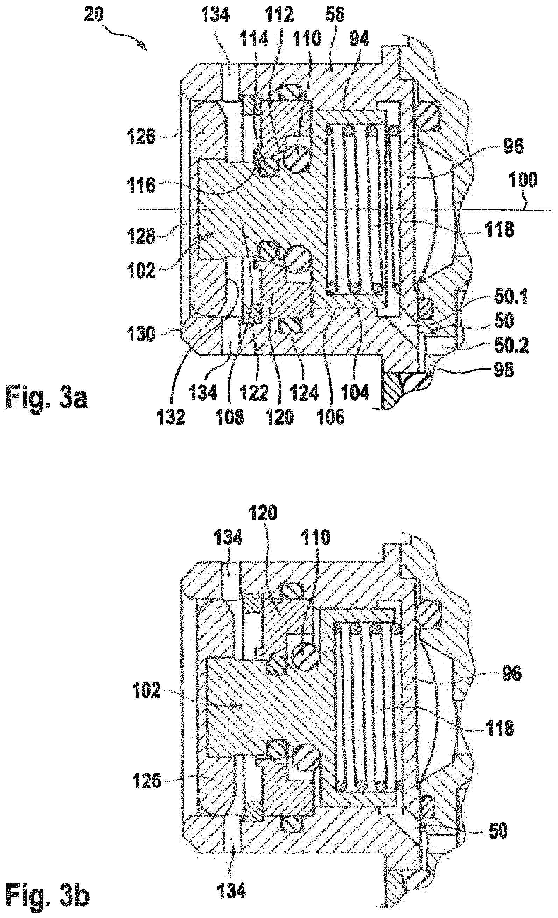

Das Drucktaster-Entlüftungsventil 20 im Detail in Fig. 3a in geschlossener und in Fig. 3b in betätigter Stellung gezeigt.

Fig. 3 zeigt eine Schnittdarstellung des Drucktaster-Entlüftungsventils 20 in geschlossener Stellung. Das Drucktaster-Entlüftungsventil 20 ist gemäß der dargestellten Ausführungsform in dem Stutzen 56 des Ringverteilers 52 angeordnet, wenngleich das Drucktaster-Entlüftungsventil 20 auch in einem separaten Stutzen angeordnet sein kann.

In dem Stutzen 56 ist eine Aufnahme 94 ausgebildet, die über den Strömungskanal 50 mit dem zweiten Ventilanschluss 16 strömungstechnisch verbunden ist. Der Strömungskanal 50 umfasst einen ersten Abschnitt 50.1, der in einer Wandung 96 des Ringverteilers 52 und einen zweiten Abschnitt 50.2, der in einer Wandung 98 des Grundkörpers 22 ausgebildet ist.

In dem Stutzen 56 ist entlang einer Längsachse 100 ein Schließelement 102 axial verschiebbar angeordnet. Das Schließelement 102 umfasst einen Führungskörper 104, der an einer im Wesentlichen zylinderförmigen Innenwandung 106 des Stutzens 56 anliegt. Von dem Führungskörper 104 erstreckt sich ein Schließbolzen 108 mit einem ersten Dichtelement 110 in Form einer Ringdichtung, die gegen einen Ventilsitz 112 anliegt. Ferner umfasst der Schließbolzen 108 ein zweites Dichtelement 114 in Form einer Radialdichtung, die an einer zylinderförmigen Innenwandung 116 des Ventilsitzes 112 anliegt. Durch die beiden Dichtelemente 110, 114 wird eine zusätzliche Sicherheit für den Fall erreicht, dass eines der Dichtelemente 110, 114 defekt ist.

Das Schließelement 102 wird mittels eines Federelementes 118 gegen den Ventilsitz 112 gedrückt. Das Federelement 118 ist in dem Führungskörper 104 aufgenommen und erstreckt sich gegen die Wandung 96, die einen Boden der topfförmigen Aufnahme 94 bildet.

Das Schließelement 102 ist dem dargestellten Ausführungsbeispiel in den Stutzen 56 eingesetzt und wird über einen umlaufenden Ring 120 fixiert. Der Ventilsitz 112 ist in dem umlaufenden Ring 120 ausgebildet, der in der Aufnahme 94 mittels eines Fixierelementes 122, wie Sprengring, fixiert ist. Zur Abdichtung des umlaufenden Rings 120 ist in der Wandung des Stutzens 56 ein Dichtelement 124 umlaufend aufgenommen.

Von dem Schließbolzen 108 erstreckt sich ein Drucktastelement 126, dessen Vorderseite 128 bezogen auf einen äußeren Rand 130 des Stutzens 56 bündig bzw. leicht nach innen versetzt angeordnet ist. Dadurch ist das Drucktastelement 126 vor Beschädigung geschützt.

Zwischen einer Innenseite 132 des Drucktastelementes 126 und dem Ring 120 sind in der Wandung des Stutzens 56 radial verlaufende Strömungskanäle 134 ausgebildet, über die bei Betätigung des Drucktaster-Entlüftungsventils 20 Fluid an die Umgebung abgelassen werden kann. Durch die radiale Anordnung der Strömungskanäle 134 in der Wandung des Stutzens 56 ist sichergestellt, dass diese bei Betätigung des Drucktaster-Entlüftungsventils 20 mittels Finger oder Daumen nicht abgedeckt werden.

Fig. 3b zeigt das Drucktaster-Entlüftungsventil 20 gemäß Fig. 3a in geöffneter, d. h. betätigter Stellung. Bei Betätigung wird das Schließelement 102 mit dem Führungsteil 104 gegen die Wandung 96 gedrückt, so dass die Dichtelemente 110, 114 nicht mehr mit dem Ventilsitz 112 in Kontakt sind. Folglich kann das an dem Ventil anschluss 16 anstehende Fluid wie Druckluft über den Strömungskanal 50, den geöffneten Ventilsitz 112 und die radialen Strömungsöffnungen 134 an die Umwelt abgelassen werden.

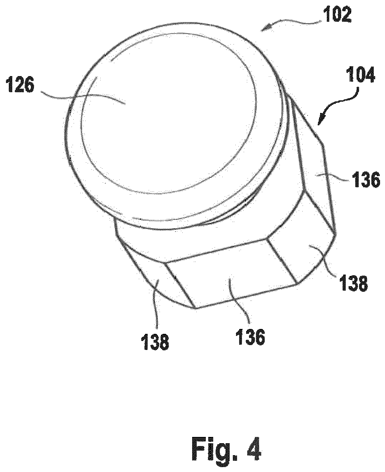

Fig. 4 zeigt eine perspektivische Ansicht des Schließelementes 102 mit Drucktastelement 126 und Führungsteil 104. Das Führungsteil 104 ist im Querschnitt im Wesentlichen quadratisch ausgebildet und weist gerade Randabschnitte 136 und bogenförmige Randabschnitte 138 auf. Die bogenförmigen Randabschnitte 138 sind an eine zylindrische Innenwandung der Aufnahme 94 angepasst, so dass das Schließelement 102 in der Aufnahme geführt ist und nicht verkantet. Die geraden Randabschnitte bilden jeweils Strömungskanäle zwischen der Innenwandung der Aufnahme und dem Führungsteil 104.

## Patentansprüche

1. Entsperrbares Rückschlagventil (10) mit Handentlüftung, umfassend:
einen ersten Ventilanschluss (14),
einen zweiten Ventilanschluss (16),
einen Ventilkörper (26) mit einem Dichtelement (30), das in einer Sperrstellung durch Anlage an einem Ventilsitz (32) eine fluidische Verbindung zwischen dem zweiten Ventilanschluss (16) und dem ersten Ventilanschluss (14) sperrt,
wobei der Ventilkörper (26) mittels eines Entsperrstößels (66) in eine entsperrte Stellung steuerbar ist, in der die fluidische Verbindung zwischen dem ersten Ventilanschluss (14) und dem zweiten Ventilanschluss (16) geöffnet ist, wobei in dem Rückschlagventil (10) ein Drucktaster-Entlüftungsventil (20) integriert ist, welches über einen Strömungskanal (50) mit dem zweiten Ventilanschluss (16) gekoppelt ist, wobei das Drucktaster-Entlüftungsventil (20) in Sperrstellung eine fluidische Verbindung zwischen dem zweiten Ventilanschluss und der Atmosphäre sperrt und in einer betätigten Stellung die fluidische Verbindung öffnet und den zweiten Ventilanschluss (16) mit der Atmosphäre verbindet, um an dem Ventilkörper (26) anstehendes Fluid an die Atmosphäre abzuleiten,
**dadurch gekennzeichnet ,**
**dass** das Drucktaster-Entlüftungsventil (20) in einem von dem Rückschlagventil (10) ausgehenden Stutzen (56) angeordnet ist, wobei das Drucktaster-Entlüftungsventil (20) ein Drucktastelement (126) aufweist, welches von dem Stutzen (56) umschlossen ist und dessen Vorderseite bezogen auf einen äußeren Rand (130) des Stutzens (56) bündig oder leicht nach innen versetzt angeordnet ist und dass in einer Wandung des Stutzens (56) radiale Entlüftungskanäle (116) ausgebildet sind, über die aus der geöffneten fluidischen Verbindung austretendes Fluid an die Atmosphäre geleitet wird.

2. Rückschlagventil nach Anspruch 1,
**dadurch gekennzeichnet,**
**dass** in dem Stutzen (56) eine Aufnahme (94) ausgebildet ist, die über den Strömungskanal (50) mit dem zweiten Ventilanschluss (16) gekoppelt ist, wobei in der Aufnahme (94) ein Schließelement (102) mit zumindest einem Dichtelement (110, 114) angeordnet ist, welches in der gesperrten Stellung gegen einen Ventilsitz (112) anliegt und die fluidische Verbindung zwischen dem zweiten Ventilanschluss (16) und der Atmosphäre sperrt und in einer betätigten Stellung die fluidische Verbindung öffnet.

3. Rückschlagventil nach Anspruch 1 oder 2,
**dadurch gekennzeichnet,**
**dass** das Schließelement (102) einen Führungskörper (104) umfasst, der zumindest abschnittsweise an einer Innenwandung der Aufnahme (94) anliegt, wobei von dem Führungskörper (104) ein Schließbolzen (108) ausgeht, der das zumindest eine Dichtelement (110, 114), wie Ringdichtung, trägt und von dem das Drucktastelement (126) ausgeht.

4. Rückschlagventil nach zumindest einem der vorhergehenden Ansprüche,
**dadurch gekennzeichnet,**
**dass** das Schließelement (102) mittels eines umlaufenden Rings (120) in der Aufnahme (94) fixiert ist, wobei in dem umlaufenden Ring (120) der Ventilsitz (112) ausgebildet ist, durch den sich der Schließbolzen (108) erstreckt.

5. Rückschlagventil nach zumindest einem der vorhergehenden Ansprüche,
**dadurch gekennzeichnet ,**
**dass** die radialen Strömungskanäle (134) zwischen einer Innenseite (132) des Drucktastelementes (126) und dem Ring (120) ausgebildet sind.

6. Rückschlagventil nach zumindest einem der vorhergehenden Ansprüche,
**dadurch gekennzeichnet,**
**dass** das Führungsteil (104) im Querschnitt im Wesentlichen quadratisch ausgebildet ist und gerade Randabschnitte (136) sowie bogenförmige Randabschnitte (138) umfasst, wobei die bogenförmigen Randabschnitte (138) an eine zylinderförmige Innenfläche der Aufnahme (94) angepasst sind und die geraden Randabschnitte mit der Innenwandung der Aufnahme Strömungskanäle bilden.

7. Rückschlagventil nach zumindest einem der vorhergehenden Ansprüche,
**dadurch gekennzeichnet,**
**dass** der umlaufende Ring (120) mittels eines Fixierelementes (122), wie Sprengring, in der Aufnahme (94) fixiert ist.

8. Rückschlagventil nach zumindest einem der vorhergehenden Ansprüche,
**dadurch gekennzeichnet,**
**dass** das Schließelement (102) mittels eines Federelementes (118) gegen den Ventilsitz (112) kraftbeaufschlagt anliegt.

9. Rückschlagventil nach zumindest einem der vorhergehenden Ansprüche,
**dadurch gekennzeichnet,**
**dass** das Federelement (118) in dem Führungskörper (104) angeordnet ist, und sich zwischen einem Boden der topfförmigen Aufnahme (94) und dem Schließelement (102) erstreckt.

10. Drucktaster-Entlüftungsventil (20), welches in einem, insbesondere von dem Rückschlagventil (10) ausgehenden, Stutzen (56) angeordnet ist, wobei das Drucktaster-Entlüftungsventil (20) ein Drucktastelement (126) aufweist, welches von dem Stutzen (56) umschlossen, wobei in dem Stutzen (56) ein axial verschiebbares Schließelement (102) angeordnet ist, von dem das Drucktastelement (126) ausgeht, welches mittels eines Federelementes (118) gegen einen Ventilsitz (112) federvorgespannt ist und eine fluidische Verbindung zwischen einem Strömungskanal (50) und der Atmosphäre sperrt und in einer betätigten Stellung die fluidische Verbindung öffnet,
**dadurch gekennzeichnet,**
**dass** eine Vorderseite des Drucktastelementes (126) bezogen auf einen äußeren Rand (130) des Stutzens (56) bündig oder leicht nach innen versetzt angeordnet ist und dass in einer Wandung des Stutzens (56) radiale Entlüftungskanäle (116) ausgebildet sind, über die aus der fluidischen Verbindung austretendes Fluid an die Atmosphäre geleitet wird.

11. Drucktaster-Entlüftungsventil nach Anspruch 10,
**dadurch gekennzeichnet,**
**dass** in dem Stutzen (56) eine Aufnahme (94) ausgebildet ist, wobei in der Aufnahme (94) das Schließelement (102) mit zumindest einem Dichtelement (110, 114) angeordnet ist, welches in einer gesperrten Stellung gegen den Ventilsitz (112) anliegt

12. Drucktaster-Entlüftungsventil nach Anspruch 10 oder 11,
**dadurch gekennzeichnet,**
**dass** das Schließelement (102) einen Führungskörper (104) umfasst, der zumindest abschnittsweise an einer Innenwandung der Aufnahme (94) anliegt, wobei von dem Führungskörper (104) ein Schließbolzen (108) ausgeht, der das zumindest eine Dichtelement (110, 114), wie Ringdichtung, trägt und von dem das Drucktastelement (126) ausgeht.

13. Drucktaster-Entlüftungsventil nach zumindest einem der vorhergehenden Ansprüche 10 bis 12,
**dadurch gekennzeichnet,**
**dass** das Schließelement (102) mittels eines umlaufenden Rings (120) in der Aufnahme (94) fixiert ist, wobei in dem umlaufenden Ring (120) der Ventilsitz (112) ausgebildet ist, durch den sich der Schließbolzen (108) erstreckt.

14. Drucktaster-Entlüftungsventil nach zumindest einem der vorhergehenden Ansprüche,
**dadurch gekennzeichnet,**
**dass** die radialen Strömungskanäle (134) zwischen einer Innenseite (132) des Drucktastelementes (126) und dem Ring (120) ausgebildet sind.

15. Drucktaster-Entlüftungsventil nach zumindest einem der vorhergehenden Ansprüche,
**dadurch gekennzeichnet,**
**dass** das Führungsteil (104) im Querschnitt im Wesentlichen quadratisch ausgebildet ist und gerade Randabschnitte (136) sowie bogenförmige Randabschnitte (138) umfasst, wobei die bogenförmigen Randabschnitte (138) an eine zylinderförmige Innenfläche der Aufnahme (94) angepasst sind und die geraden Randabschnitte mit der Innenwandung der Aufnahme Strömungskanäle bilden.
